Europäisches Patentamt

European Patent Office

Office européen des brevets

(19)

(11) **EP 1 452 494 A1**

(12) **EUROPEAN PATENT APPLICATION**

(43) Date of publication:
**01.09.2004 Bulletin 2004/36**

(51) Int Cl.⁷: **C03B 11/10**, C03B 11/12,
C03B 11/02, C03B 27/06

(21) Application number: **04004038.8**

(22) Date of filing: **23.02.2004**

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(30) Priority: **25.02.2003 JP 2003047950**

(71) Applicant: **Asahi Glass Company, Limited
Chiyoda-ku, Tokyo 100-8405 (JP)**

(72) Inventors:
• **Tatsukoshi, Kentaro
Takasago-shi Hyogo (JP)**
• **Tominaga, Tetsuro
Ta Lin Lee Taoyuan (TW)**

(74) Representative: **Müller-Boré & Partner
Patentanwälte
Grafinger Strasse 2
81671 München (DE)**

(54) **Bottom mold for molding a glass panel for a cathode ray tube and method for producing a glass panel for a cathode ray tube**

(57) A bottom mold for molding a glass panel for a cathode ray tube includes a hollow portion defined by a rectangular bottom wall (2) and a side wall (3) provided on four sides of the bottom wall. A refrigerant is supplied to a central portion of the bottom wall (2) from under the bottom wall to cool a glass panel for a cathode ray tube (5) formed by pressing a glass gob in the hollow portion. The bottom wall (2) has a hollow layer (4) provided at the central portion to enhance the homogeneity of the temperature distribution within the panel by preventing the central portion of the bottom mold and, thus, of the panel from being excessively cooled.

Fig. 2

EP 1 452 494 A1

## Description

The present invention relates to a bottom mold for molding a glass panel for a cathode ray tube and a method for producing a glass panel for a cathode ray tube, wherein a bottom mold has a hollow layer formed in a bottom wall to prevent a central portion of the bottom wall from being excessively cooled and to cool a peripheral portion of the bottom wall more intensively than the central portion of the bottom wall when performing cooling from under the bottom wall.

When a glass panel for a cathode ray tube (hereinbelow, referred to as "panel") is molded, there has been generally used a method wherein a certain amount of molten glass gob (hereinbelow, referred to as "gob") is supplied into a bottom mold, a top mold is lowered onto the bottom mold to pressurize-mold the gob into a panel, the top mold is raised, the molded panel is cooled in the bottom mold, and then the panel is taken out of the bottom mold. This method will be described in detail, referring to some of the accompanying drawings.

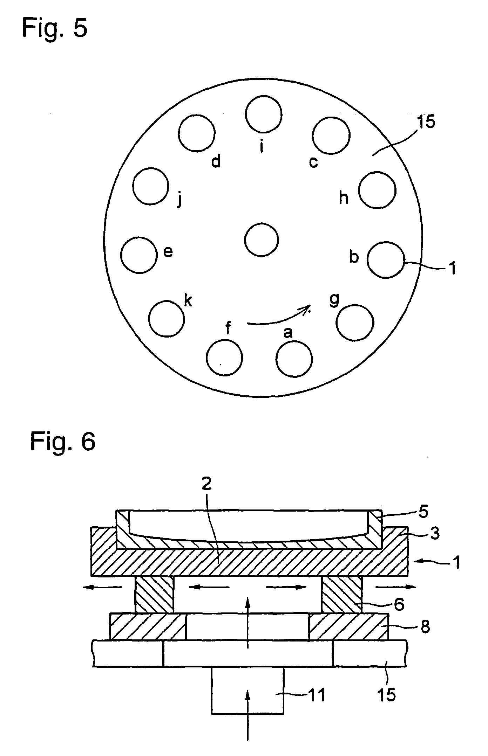

The series of molding steps for a panel stated above is performed by a molding system, which normally has a plurality of bottom molds 1 provided on a rotary table 15 with equal intervals as shown in Fig. 5. First, a bottom mold 1, which has an intermediate mold for molding edges of a panel put thereon, is supplied with a certain amount of gob at a position "a". Next, the bottom mold with the gob supplied thereinto is moved to a pressure-molding position "b", where the top mold is lowered to pressurize-mold the gob into a glass panel for a cathode ray tube in a hollow box shape.

At this time, the temperature of the gob in the bottom mold is abruptly lowered since the top mold has a relatively lower temperature than the gob. While the rotary table 15 is intermittently rotated after the top mold is raised, the panel in the bottom mold is cooled. Even after the intermediate mold is taken out of the bottom mold at a position "e", the gob is sequentially carried to respective cooling positions "f" to "i" to be sufficiently cooled to such a degree that the panel can be prevented from being deformed in future handling. After that, the cooled panel is taken out of the bottom mold at a position "j" and is transferred to a subsequent process. The bottom mold, which the panel has been taken out of, is moved to the gob supply position "a" for next molding.

At each of the cooling positions, the panel has an outer side in contact with the bottom mold cooled through a contact surface with the bottom mold. The panel has an inner side cooled with a refrigerant, such as cooling air, (hereinbelow, referred as to "cooling air"), which is blasted out of a duct provided above each of the cooling positions. The molding system has a circular nozzle provided to face toward the bottom wall of a bottom mold at a lower position in each of the cooling positions. The bottom mold is cooled with cooling air, which is upwardly blasted out of the nozzle.

Fig. 6 shows a unit for cooling the bottom wall of a bottom mold in section. As shown, the bottom mold 1 with a panel 5 put thereon has a bottom wall 2 provided thereon with a plurality of legs 6 to be fixed to the rotary table 15 through a mounting flange 8. In such an arrangement, the bottom wall of the bottom mold is cooled by cooling air, which is blasted out of the nozzle 11 provided under the mold. The cooling air blasted out of the nozzle 11 passes through a hollow space surrounded by the legs 6, collides with a central portion of the bottom wall first and then flows to a peripheral portion of the bottom wall.

The bottom wall has a heat transfer rate distribution having a chevron pattern, which peaks at a central stagnation point. This is because the cooling air is a collision jet flow, which is directed toward the central portion of the bottom wall 2 of the bottom mold and has a substantially circular shape. Since the cooling air has such a heat transfer rate distribution, cooling of the peripheral portion of the panel 5 is relatively weakened since the bottom wall of the bottom mold has a lower temperature in the central portion and a higher temperature in the peripheral portion. When an attempt is made to increase the supply amount of the cooling air in order to lower the temperature of the peripheral portion of the bottom mold, the temperature of the central portion is excessively lowered to create excessive cooling, extremely degrading moldability.

In order to solve this problem, JP-A-2000-351638 has proposed a method wherein an outlet for supplying cooling air toward the bottom wall of a bottom mold is formed in a substantially rectangular shape to cool the bottom mold in an effective and uniform fashion (see Figs. 1 to 4 of this publication).

However, it is difficult to solve the insufficient cooling of the peripheral portion of the bottom mold by the cooling unit disclosed in JP-A-2000-351638. This is because the cooling air supplied from the outlet of this cooling unit includes collision jet flows in a slit pattern directed toward the central portion of the bottom wall of the bottom mold, and the bottom wall is not different in terms of having a heat transfer rate distribution having a chevron pattern, which peaks at a central stagnation point.

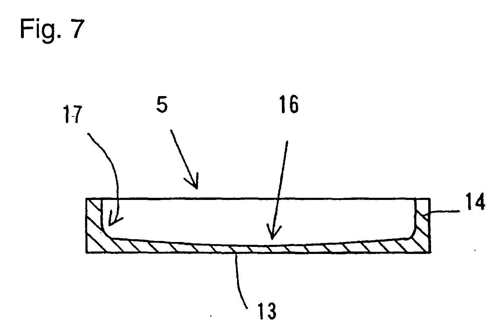

Recently, cathode ray tubes have rapidly and widely had an image display screen made flat. In the case of cathode ray tubes having a shadow mask, the panel needs to have an inner surface formed in a spherical shape having a relatively great curvature in terms of structure. For this reason, as shown in Fig. 7, the panel 5 is designed to have a face portion 13 formed so as to have a thickness at a peripheral portion two times or more that of a central portion because of the image display screen being made flat, in some cases. In other words, the face portion 13 has a cross-sectional shape having a lopsided thickness distribution, wherein the thickness of the face portion increases from the central portion 16 toward the peripheral portion 17 in any directions, though the thickness has slightly different thickness distributions according to directions, such as a short axis direction, a long axis direction and diagonal directions. This type of face panel is called a panel having a lopsided thickness.

Since the peripheral portion of the panel having a greater thickness is difficult to be cooled because of such a lopsided thickness distribution, there is caused a problem that when this type of face panel is cooled in the production process stated earlier, the central portion 16 is excessively cooled while the peripheral portion 17 is insufficiently cooled. On the other hand, the bottom mold has a tendency to have such a temperature distribution that the central portion of the bottom wall is sufficiently cooled while the peripheral portion of the bottom wall is relatively insufficiently cooled as stated earlier.

Accordingly, when the panel in the bottom mold is tempered in the cooling step, the face portion 13 has significantly different tempering stress values at the peripheral portion 17 and at the central portion 16. In other word, the tempering stresses in the peripheral portion 17 of the face portion 13 are relatively quite lower since the peripheral portion is difficult to be cooled from an inner side because of the provision of a skirt portion 14 extending perpendicularly from a peripheral edge of the face portion and since the peripheral portion is additionally subjected to insufficient cooling because of having a relatively greater thickness than the other portions. Additionally, there is caused a problem that the tempering stress distribution is further lopsided since the peripheral portion of the bottom wall of the bottom mold has a quite high temperature due to insufficient cooling as stated earlier.

On the other hand, since a cathode ray tube has an inner space evacuated and depressurized for use, tensile stresses (hereinbelow, referred to as "tensile vacuum stresses") are created everywhere in the envelop. The tensile vacuum stresses have different stress values or distributions according to the shape or the thickness of the panel. Observing the magnitude and the distribution of the tensile vacuum stresses in a face portion having a substantially rectangular shape, the tensile vacuum stresses have the maximum value in the peripheral portion at an outer surface of the face portion, in particular, at both ends of each of the short axis and the long axis. From this viewpoint, in order that the panel can withstand the maximum vacuum stresses, it is desirable to provide relatively greater tempering stresses to the peripheral portion of the face portion including both ends of each of the short axis and the long axis.

However, it has been difficult to produce a tempered panel in a desired fashion by conventional techniques for cooling a bottom mold since the peripheral portion of the face portion has such a low cooling efficiency that a portion to be tempered in the most intensive way is insufficiently tempered as stated earlier. In particular, it is extremely difficult to sufficiently and uniformly temper the peripheral portion of the outer surface of a face portion formed as a large flat panel having a size of 29 inch or larger.

It is an object of the present invention to provide a bottom mold capable of making the temperature distribution relatively moderate in the peripheral portion of a bottom wall thereof, and a method for producing a glass panel for a cathode ray tube by using the bottom mold.

The present invention is proposed to attain the object. In accordance with the present invention, it is possible to prevent a central portion of a bottom wall from being excessively cooled and to cool a peripheral portion of the bottom wall more intensively than the central portion of the bottom wall when cooling the bottom mold in a process for producing, in particular, a panel having an lopsided thickness distribution wherein a face portion has a greater thickness at a peripheral portion than that at a central portion.

Specifically, the present invention is directed to a bottom mold to be used in steps for molding a glass panel for a cathode ray tube. The present invention provides the following bottom molds for molding a glass panel for a cathode ray tube, which can restrain thermal conduction in a central portion of a bottom wall thereof in a thickness direction to prevent the central portion of the bottom wall from being excessively cooled and to cool a peripheral portion of the bottom wall more intensively than the central portion of the bottom wall when cooling the bottom mold.

1. A bottom mold for molding a glass panel for a cathode ray tube, comprising a rectangular bottom wall, a side wall provided on four sides of the bottom wall, and a glass filling portion defined by the bottom wall and the side wall, wherein a refrigerant is supplied to a central portion of the bottom wall from under the bottom wall to cool a glass panel for a cathode ray tube to be filled in the glass filling portion, and the bottom wall has a hollow layer provided at the central portion.

2. The bottom mold according to item 1, wherein the hollow layer is formed in a substantially circular plan shape.

3. The bottom mold according to item 1 or 2, wherein the plan shape of the hollow layer has a minimum diameter $D_S$ and a maximum diameter $D_L$, and the following relationship is met:

$$0.25 \leqq D_S/D_L \leqq 1$$

4. The bottom mold according to item 1, 2 or 3, wherein the bottom wall has an area $S_B$ in vertical projection, and the plan shape of the hollow layer has an area $S_H$, and the following relationship is met:

$$0.01 \leqq S_H/S_B \leqq 0.25$$

5. The bottom mold according to any one of items 1 to 4, wherein the bottom wall has a center, and the hollow layer has a thickness of 0.1 to 20 mm at the center.

6. The bottom mold according to any one of items 1 to 5, wherein the central portion of the bottom wall with the hollow layer provided therein has a lower surface formed in a convex shape.

The present invention also provides a method for producing a glass panel for a cathode ray tube, comprising supplying a refrigerant toward a central portion of a bottom wall of a bottom mold for molding a glass panel for a cathode ray tube, the bottom mold comprising a rectangular bottom wall and a side wall provided on four sides of the bottom wall, cooling a glass panel to be filled in the bottom mold, and providing a hollow layer at the central portion of the bottom wall of the bottom mold.

Conventional bottom molds without a hollow layer have caused the problem that the bottom molds have had a central portion excessively cooled when an attempt is made to cool a peripheral portion thereof. Since the present invention has the structure as stated earlier, the bottom mold according to the present invention can cool the peripheral portion of the bottom wall relatively more intensively without excessively cooling the central portion of the bottom wall, by providing the hollow layer to restraining cooling of the central portion of the bottom wall and to keep the central portion warm. Thus, it is possible to create a desired tempering compressive stress in a peripheral portion of a face portion of the glass panel.

The present invention is appropriate to cooling a bottom mold for a glass panel for a cathode ray tube having a size of, in particular, 29 inch or larger, which has a lopsided thickness distribution wherein a face portion has a greater thickness at a peripheral portion than that at a central portion.

In the drawings:

Fig. 1 is a plan view of the bottom mold according to a preferred embodiment of the present invention;
Fig. 2 is a cross-sectional view taken along the line II-II of Fig. 1;
Fig. 3 is a cross-sectional view of the bottom mold according to another embodiment of the present invention;
Fig. 4 is a schematic view showing measuring points for tempering compressive stresses in the glass panel for a cathode ray tube in an example;
Fig. 5 is a schematic plan view of a system for producing a glass panel for a cathode ray tube;
Fig. 6 is a schematic cross-sectional view of a conventional bottom mold cooling unit; and

Fig. 7 is a cross-sectional view of a glass panel for a cathode ray tube.

In general, when cooling air is blasted to a lower surface of a central portion of a bottom wall of a bottom mold to cool the bottom mold by collision jet flows created by the blasted cooling air, the bottom wall has a heat transfer rate distribution having a chevron pattern, which peaks at a stagnation point of the central portion of the bottom wall stated earlier. From this viewpoint, when cooling a peripheral portion of the bottom wall, it is technically important to provide a heat insulation layer in order to prevent the central portion from being excessively cooled. The present invention is characterized in that a hollow layer is provided in the central portion of the bottom wall of the bottom mold as means for restraining the central portion of the bottom wall from being excessively cooled, i.e., thermal insulation means for controlling the temperature distribution in the bottom wall of the bottom mold.

From this viewpoint, the hollow layer is formed so as to provide a certain thermal insulation effect to the central portion of the bottom wall of the bottom mold. Since the bottom wall of the bottom mold has substantially the same rectangular shape as the face portion of a panel, the central portion of the bottom wall of the bottom mold is a central portion of the rectangular bottom wall, specifically, a region spread within a certain range from the center of the bottom wall where the long axis and the short axis of the rectangular bottom wall intersect together. The present invention is characterized in that the hollow layer is formed along the bottom wall in this region so as to have a certain thickness. When the hollow layer can be formed in the bottom wall, the hollow layer is preferably provided so as to be brought as close to the lower surface of the bottom wall as possible. It is possible to reduce trouble for forming the hollow layer in the bottom wall by bringing the position of the hollow layer close to the lower surface of the bottom wall as stated earlier. Additionally, it is possible to effectively restrain the central portion of the bottom wall of the bottom mold from being excessively cooled and to intensively cool the peripheral portion of the bottom wall accordingly since a heat transfer surface for the cooling air is brought close to the hollow layer.

In the present invention, there is no limitation to the shape of the hollow layer in vertical projection. When the plan shape of the hollow layer is referred to with respect to the present invention, the plan shape of the hollow layer means the shape of the hollow layer in vertical projection. The plan shape may be, e.g., a rectangular or polygonal shape in addition to a circular shape or a substantially circular shape, such as an oval shape. Since legs for fixedly mounting the bottom wall to a molding system are generally provided in a circular arrangement around the center of the bottom wall of the bottom mold on the lower surface of the bottom wall, it is normally preferable that the hollow layer is formed in a substantially circular shape in a region surrounded by the legs. When the hollow layer is formed in the central portion of the bottom wall surrounded by the legs, it is possible to avoid a reduction in the strength of the bottom mold or deformation of the bottom mold and to form the hollow layer easily since it is possible to prevent the hollow layer and a leg from overlapping each other.

When the plan shape of the hollow layer according to the present invention has a minimum diameter $D_S$ and a maximum diameter $D_L$, it is preferable that the relationship of $0.25 \leq D_S/D_L \leq 1$ is met. It is not preferable that $D_S/D_L$ is smaller than 0.25. This is because there is created an extreme difference in cooling between the long axis and the short axis of the rectangular face portion in this case. In particular, when the face portion of a panel is tempered, the degrees of tempering are significantly lopsided by this difference, which is not preferable. On the other hand, the value of 1 as the upper limit is defined considering that thermal insulation is made in a substantially uniform fashion in directions of both of the long axis and the short axis as in, e.g., a circular hollow layer. It is normally preferable that a circular hollow layer is used.

When the plan shape of the hollow layer is a complicated shape, not a simple shape, such as a substantially circular shape or a rectangular shape, it is possible to determine a minimum diameter and a maximum diameter based on a simple shape approximating the hollow layer. When the hollow layer is not formed in a circular shape, the major axis of the hollow layer is normally aligned with the long axis direction of the bottom mold.

In the present invention, the heat insulation region formed at the bottom wall of the bottom mold is closely related to the size (area) of the plan shape of the hollow layer. As the hollow layer has a greater area, the heat insulation region of the bottom mold is proportionally wider. For this reason, it is preferable that the area occupied by the hollow layer has a certain ratio to the area of the bottom surface of the bottom mold.

With respect to the area occupied by the hollow layer, provided that the area of the bottom surface of the bottom mold (hereinbelow, referred to as the area of the bottom mold) that is obtained by vertically projecting the bottom surface of the bottom mold (corresponding to the face portion of a panel to be molded) is $S_B$, and that the area of the plan shape of the hollow layer provided at the bottom mold (hereinbelow, referred to as the area of the hollow layer) is $S_H$, it is preferable that $0.01 \leq S_H/S_B \leq 0.25$ is established, and it is more preferable that $0.05 \leq S_H/S_B \leq 0.1$ is established. When $S_H/S_B$ is smaller than 0.01, it becomes difficult to alleviate or eliminate excessive cooling of the bottom wall since only a limited area of the bottom wall of the bottom mold is thermally insulated. Conversely, when this value is beyond 0.25, the bottom wall is thermally insulated in a wide range from the central portion to the peripheral portion. Since even the peripheral portion, which needs to be intensively cooled, is thermally insulated in an unnecessary fashion, there is a possibility that the bottom mold fails to be cooled to a desired temperature due to insufficient cooling in the peripheral portion. As a result, it becomes difficult to sufficiently cool a limited part of the face portion.

The hollow layer according to the present invention is normally formed at the central portion of the bottom wall of the bottom mold so as to have a uniform thickness. When it is necessary to modify the thermal insulation property of the bottom wall of the bottom mold, the thickness may be modified accordingly. When it is necessary to control the thermal insulation property according to positions of the bottom wall of the bottom mold, the thickness of the hollow layer may be partly modified. For example, when the thermal insulation effect of the hollow layer in a specific direction or in a peripheral portion is relatively weakened rather than the central portion, the thickness of the hollow layer at such a region may be reduced.

In a preferred mode of the present invention, the thickness of the hollow layer is determined in such a way as to be uniform or to decrease from the center toward the peripheral portion of the bottom wall and peaks at the center of the bottom wall. From this viewpoint, it is possible to substantially prevent the central portion of the face portion from being excessively cooled by appropriately determining the thickness of the hollow layer at the center of the bottom wall. The thickness of the hollow layer at the center of the bottom wall is preferably from 0.1 to 20 mm. When the hollow layer has a thickness of less than 0.1 mm, it is difficult to solve the problem of excessive cooling at the central portion of the bottom wall since the thermal insulation effect is not sufficient. It is not preferable that the hollow layer has a thickness beyond 20 mm. This is because the hollow layer is a bar to ensure cooling required for molding a panel and lowers the strength of the bottom wall of the bottom mold.

The hollow layer according to the present invention may be provided at the bottom wall of the bottom mold by the following methods. One of the methods is one that the hollow layer is provided by forming a recess in the central portion of the bottom wall of the bottom mold and closing the opening of the recess with a rid. Another method is one that the hollow layer is provided by mounting a hollow covering member to the lower surface of the central portion of the bottom wall. In this way, the hollow layer may be embedded in the bottom wall of the bottom mold or be provided by a hollow member, which is formed in a convex fashion on the bottom wall of the bottom mold.

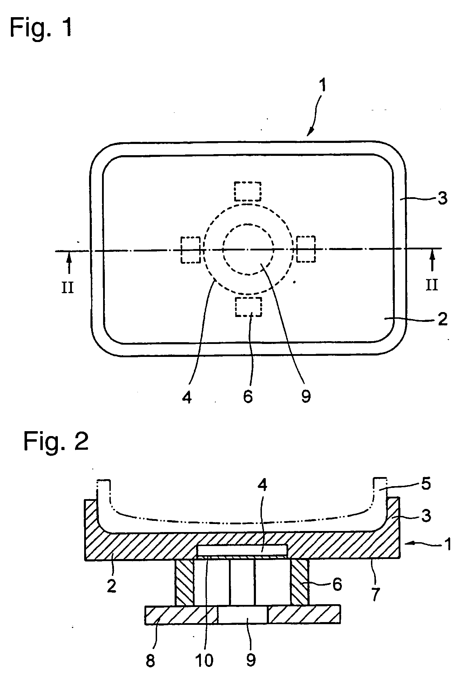

Now, preferred embodiments of the present invention will be specifically described, referring to the accompanying drawings. Fig. 1 is a plan view of the bottom mold according to a preferred embodiment of the present invention, and Fig. 2 is a cross-sectional view taken along the line II-II of Fig. 1. The bottom mold 1 has a substantially rectangular glass filling portion formed by a substantially rectangular bottom wall 2 and a side wall 3 extending perpendicularly from a peripheral edge of the bottom wall 2. When a panel is produced in practice, the bottom mold is used so as to have an intermediate mold (not shown) put on the side wall 3.

The bottom wall 2 has a lower surface 7 provided with legs (e.g., four legs) 6, which are located at a certain distance from the center of the bottom wall 2 in a long axis direction and in a short axis direction, i.e., are located in a circular arrangement about the center of the bottom wall 2, and each of which has a lower end welded to a mounting flange 8. The bottom mold 1 may be fixed to a molding system by screwing the mounting flange 8 to the molding system. A panel 5, which has been put into the glass filling portion of the bottom mold 1, has an outer side cooled through a contact surface of the bottom wall 2, which has been cooled by cooling air blasted toward the bottom wall 2 of the bottom mold 1 through a hole 9 formed in a central portion of the mounting flange 8.

The bottom wall 2 of the bottom mold 1 has a circular hollow layer 4 provided in a central portion surrounded by the legs 6 so as to have a radius of, e.g., 100 mm and an entire thickness of, e.g., 10 mm as shown in Fig. 1 or Fig. 2. Specifically, the hollow layer 4 having a thickness of 10 mm is formed by cutting a recess in the central portion of the bottom wall 2 in dimensions of a depth of 15 mm from a lower surface of the bottom wall and a radius of 100 mm, and closing the opening of the recess with a lid 10 having a thickness of 5 mm. The lid 10 may be fixed to the opening by, e. g., providing the lid with a male thread and engaging the lid with a female thread formed on the recess, or simply screwing or welding the lid 10. The hollow layer 4 may be provided in the bottom wall 2 of the bottom mold 1 in such a manner. It is preferable that the lid 10 is made of the same material as the bottom mold 1 in order to cope with deformation due to thermal expansion in use.

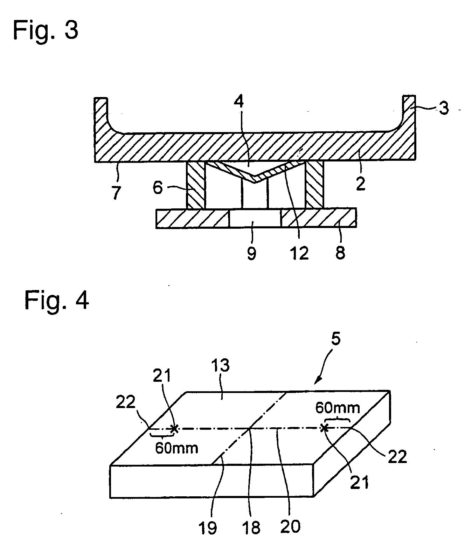

Fig. 3 shows another embodiment of the present invention as an example. In this embodiment, the hollow layer 4 is provided by mounting an umbrella-shaped member 12 to the central portion of the bottom wall 2 of the bottom mold 1 by, e.g., screwing or welding, without providing the hollow layer by cutting the bottom wall 2 of the bottom mold as shown in Fig. 2 as stated earlier. In other words, the umbrella-shaped member 12 may have a hollow space corresponding to the hollow layer 4 formed therein, and the umbrella-shaped member 12 may be mounted to the lower surface 7 of the bottom wall 2 of the bottom mold to form the hollow layer 4 between the lower surface 7 and the umbrella-shaped member 12. Since the umbrella-shaped member 12 is mounted, the bottom wall 2 has an outwardly convex shape at a portion with the hollow layer 4, and the hollow layer 4 gradually decreases from a center portion toward a peripheral portion in thickness as shown.

Accordingly, being compared with a hollow layer having a uniform thickness as in the embodiment shown in Fig. 2, the hollow layer 4 according to this embodiment has a better thermal insulation property at the center portion having a great thickness than that at the peripheral portion since the center portion and the peripheral portion have significantly different thicknesses. Since the collision jet flows of cooling air blasted to the umbrella-shaped member 12 smoothly move toward the peripheral portion along an umbrella-shaped inclined surface, no stagnation is caused at the central portion of the bottom wall 2. Even if stagnation is caused at the central portion of the bottom wall, the stagnation is mild. Additionally, there is a tendency to restrain the central portion of the bottom wall 2 from being excessively cooled. Because of having these two functions, the hollow layer in this embodiment is appropriate when more intensively and significantly restraining the central portion of the bottom wall 2 from being cooled. The umbrella-shaped member 12 may be formed in a different shape, such as a semi-spherical shape or a flat disk shape, though not shown. Although the hollow layer according to the present invention can offer a desired thermal insulation effect by itself as stated earlier, the hollow layer may have a thermal insulating material filled therein as needed.

EXAMPLE

A molded panel for a cathode ray tube having a size of 34 inch (see Fig. 7) was cooled by using a bottom mold 1 having a circular hollow layer 4 (radius=100 mm, $S_H=3.14\times10^4$ mm$^2$) illustrated in Fig. 1 and Fig. 2. The face portion of the panel had an outer surface formed in a substantially flat shape (a curvature radius of 100,000 mm). The face portion had such a lopsided thickness distribution that the thickness at a central portion was about 15 mm, the thickness at both ends of the long axis as a peripheral portion was about 23 mm, and the thickness at both ends of a diagonal direction was about 30 mm.

On the other hand, the cooling of the bottom mold was performed by using a cooling unit similar to that shown in Fig. 6. The outlet for cooling air had an inner diameter of 60 mm. The cooling air is set at a flow rate of about 100 m/s, and the time period from the start to the end of air blast for each of the cooling positions was set at 20 sec. Since the area of the bottom mold $S_B$ was about 400,000 mm$^2$, the ratio of the occupied area by the area of the hollow layer $S_H$ was about 8%. Additionally, a conventional bottom mold without a hollow layer as a comparative example was prepared, the bottom mold as the comparative example was provided on a different position of the molding system with the bottom mold in this example mounted thereto, and a similar panel was molded under the same conditions.

The temperatures of both bottom molds were measured just after the respective panels were taken out. According to the measurements, the inner side of the bottom mold in this example had a temperature of 500°C at a central bottom portion and a temperature of 510°C at an end of the long axis while the inner side of the bottom mold in the comparative example had a temperature of 490°C at the central bottom portion and a temperature of 550°C at the end of the long axis. The measurements reveal that the present invention can offer an advantage to lower the temperature at the peripheral portion of the inner side of the bottom mold without a decrease in the temperature of the central bottom portion of the mold.

The two 34-inch panels, which were taken out of the respective bottom molds of the example and the comparative example, were instantly cooled on a like-for-like basis to be provided with compressive stresses by thermal tempering. The panels thus thermally tempered were measured in terms of the tempering compressive stresses in the outer surface of both face portions.

The compressive stresses were measured by using the system disclosed in JP-A-11-281501. Specifically, the measurement was performed by a stress measuring system using photoelastic approach, which included a measuring unit comprising a light source, a polarizer, a slit, first and second prisms, and a douser; a compensator; an analyzer; and an eyepiece. The measuring points of the tempering compressive stresses in the outer surface of each of the face portions are shown in Fig. 4. A first measuring point is located at the center (intersection between a short axis 19 and a long axis 20) 18 of the outer surface of each of the face portions 13. A second measuring point is located at each of positions 21 close to both ends of the long axis of the outer surface of each of the face portions 13. The portions 21 close to the respective ends of the long axis were located at positions of 60 mm inside the outermost peripheral edges 22 at the respective ends of the long axis toward the center of the respective face portions 13.

By the measurements, it was affirmed that the panel molded by the bottom mold of the example of the present invention had a tempering compressive stress of 15.0 MPa at the center of the face portion and a tempering compressive stress of 14.9 MPa at each of the portions close to the respective ends of the long axis, and that sufficient tempering compressive stresses were created even in the portions close to the respective ends of the long axis, which were particularly difficult to be thermally tempered in the peripheral portion of the face portion. On the other hand, the panel molded by the conventional bottom mold of the comparative example had a tempering compressive stress of 15.3 MPa at the center of the face portion and a tempering compressive stress of 10.1 MPa at each of the portions close to the respective ends of the long axis. Although the center of the face portion was provided with the same level of tempering compressive stress, the portions close to the respective ends of the long axis, which were difficult to be thermally tempered in the peripheral portion of the face portion, failed to be provided with a desired tempering compressive stress since these portions were insufficiently cooled.

The entire disclosure of Japanese Patent Application No. 2003-047950 filed on February 25, 2003 including specification, claims, drawings and summary is incorporated herein by reference in its entirety.

## Claims

1. A bottom mold for molding a glass panel for a cathode ray tube, comprising:

   a rectangular bottom wall;
   a side wall provided on four sides of the bottom wall; and
   a glass filling portion defined by the bottom wall and the side wall;

   wherein a refrigerant is supplied to a central portion of the bottom wall from under the bottom wall to cool a glass panel for a cathode ray tube to be filled in the glass filling portion, and the bottom wall has a hollow layer provided at the central portion.

2. The bottom mold according to Claim 1, wherein the hollow layer is formed in a substantially circular plan shape.

3. The bottom mold according to Claim 1 or 2, wherein the plan shape of the hollow layer has a minimum diameter $D_S$ and a maximum diameter $D_L$, and the following relationship is met:

$$0.25 \leqq D_S/D_L \leqq 1$$

4. The bottom mold according to Claim 1, 2 or 3, wherein the bottom wall has an area $S_B$ in vertical projection, and the plan shape of the hollow layer has an area $S_H$, and the following relationship is met:

$$0.01 \leqq S_H/S_B \leqq 0.25$$

5. The bottom mold according to any one of Claims 1 to 4, wherein the bottom wall has a center, and the hollow layer has a thickness of 0.1 to 20 mm at the center.

6. The bottom mold according to any one of Claims 1 to 5, wherein the central portion of the bottom wall with the hollow layer provided therein has a lower surface formed in a convex shape.

7. A method for producing a glass panel for a cathode ray tube, comprising:

supplying a refrigerant toward a central portion of a bottom wall of a bottom mold for molding a glass panel for a cathode ray tube, the bottom mold comprising a rectangular bottom wall and a side wall provided on four sides of the bottom wall;

cooling a glass panel to be filled in the bottom mold; and

providing a hollow layer at the central portion of the bottom wall of the bottom mold.

Fig. 1

Fig. 2

## Fig. 3

## Fig. 4

Fig. 5

Fig. 6

Fig. 7

**EP 1 452 494 A1**

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | DE 101 02 824 A (SCHOTT GLAS) 1 August 2002 (2002-08-01) | 1-5 | C03B11/10 C03B11/12 C03B11/02 C03B27/06 |
| Y | * paragraphs [0017], [0026], [0028], [0030], [0050]; figures 2c,2d * <br> * paragraphs [0066] - [0068] * | 6,7 | |
| Y | US 3 119 681 A (VOGELPOHL ROL L) 28 January 1964 (1964-01-28) | 6 | |
| A | * column 2, line 27 - line 35; figures 1-3,5 * <br> * column 3, line 7 - column 4, line 68 * | 1-5,7 | |
| Y | PATENT ABSTRACTS OF JAPAN vol. 2000, no. 15, 6 April 2001 (2001-04-06) & JP 2000 351638 A (NIPPON ELECTRIC GLASS CO LTD), 19 December 2000 (2000-12-19) * abstract * | 7 | |
| A | PATENT ABSTRACTS OF JAPAN vol. 1996, no. 10, 31 October 1996 (1996-10-31) & JP 8 165125 A (ASAHI GLASS CO LTD), 25 June 1996 (1996-06-25) * abstract * | 1,6 | **TECHNICAL FIELDS SEARCHED (Int.Cl.7)** <br> C03B |
| P,A | WO 03/048055 A (BYUN HYUN HEE ; CHOI JANG SOO (KR); KIM JUN BUM (KR); KIM NAM HUN (KR)) 12 June 2003 (2003-06-12) * page 1, line 22 - line 36; claim 1; figures 1-3 * <br> * page 10, line 7 - line 20 * | 7 | |

-/--

The present search report has been drawn up for all claims

| Place of search | Date of completion of the search | Examiner |
|---|---|---|
| Munich | 14 May 2004 | Deckwerth, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................
& : member of the same patent family, corresponding document

EPO FORM 1503 03.82 (P04C01)

European Patent
Office

**EUROPEAN SEARCH REPORT**

Application Number

EP 04 00 4038

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | PATENT ABSTRACTS OF JAPAN vol. 2002, no. 03, 3 April 2002 (2002-04-03) & JP 2001 328830 A (NIPPON ELECTRIC GLASS CO LTD), 27 November 2001 (2001-11-27) * abstract * | 7 | |
| A | PATENT ABSTRACTS OF JAPAN vol. 2003, no. 02, 5 February 2003 (2003-02-05) -& JP 2002 316827 A (ASAHI GLASS CO LTD), 31 October 2002 (2002-10-31) * abstract * | 1-7 | |
| | | | TECHNICAL FIELDS SEARCHED (Int.Cl.7) |

The present search report has been drawn up for all claims

| Place of search | Date of completion of the search | Examiner |
|---|---|---|
| Munich | 14 May 2004 | Deckwerth, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 04 00 4038

This annex lists the patent family members relating to the patent documents cited in the above-mentioned European search report.
The members are as contained in the European Patent Office EDP file on
The European Patent Office is in no way liable for these particulars which are merely given for the purpose of information.

14-05-2004

| Patent document cited in search report | | Publication date | Patent family member(s) | | Publication date |
|---|---|---|---|---|---|
| DE 10102824 | A | 01-08-2002 | DE<br>WO<br>EP | 10102824 A1<br>02060829 A1<br>1353881 A1 | 01-08-2002<br>08-08-2002<br>22-10-2003 |
| US 3119681 | A | 28-01-1964 | NONE | | |
| JP 2000351638 | A | 19-12-2000 | NONE | | |
| JP 8165125 | A | 25-06-1996 | NONE | | |
| WO 03048055 | A | 12-06-2003 | KR<br>WO | 2003045538 A<br>03048055 A1 | 11-06-2003<br>12-06-2003 |
| JP 2001328830 | A | 27-11-2001 | NONE | | |
| JP 2002316827 | A | 31-10-2002 | NONE | | |

EPO FORM P0459

For more details about this annex : see Official Journal of the European Patent Office, No. 12/82